# EUROPEAN PATENT SPECIFICATION

(11) **EP 0 401 936 B1**
(45) Date of publication and mention of the grant of the patent: **05.10.1994**
(21) Application number: 90201448.9
(22) Date of filing: 01.06.1990
(51) Int. Cl.: F16L 55/10, B08B 9/04

(54) **Method and means for the temporary plugging of pipelines**
Verfahren und Vorrichtung zum zeitweiligen Abdichten von Rohrleitungen
Procédé et dispositif pour l'obturation temporaire de tuyaux

(30) Priority: 06.06.1989 US 361897
(43) Date of publication of application: 12.12.1990
(73) Proprietor: SOFITECH N.V., 2030 Antwerpen (BE); COMPAGNIE DES SERVICES DOWELL SCHLUMBERGER, F-92541 Montrouge Cédex (FR)
(72) Inventor: Gaisbauer, Andy T., F-42170 Saint Just Saint Rambert (FR); Hinkel, Jerald J., Tulsa, Oklahoma 74133 (US)
(74) Representative: Richebourg, Michel François

(56) References cited:
- EP-A- 0 029 243
- GB-A- 2 054 793
- US-A- 3 209 771
- US-A- 3 306 870

## Description

This invention relates to the art pipelines and pipeline repair and, more particularly, to a method and means for forming a temporary plug within the pipeline so that the fluid-tight integrity of the pipeline or a particular section thereof may be violated.

### Background of the Invention

It is routinely necessary to cut into a section of a pipeline for various reasons such as leak repair, valve installation, branch coupling, and the like. In the past, it has been common to totally de-commission the pipeline in order to remove hazardous fluids therefrom such as crude oil, oil products, natural gas, gas liquids and the like. In this manner, there would be no substantial environmental consequences of breaking the fluid-tight integrity of the pipeline. This has been particularly true of sub-sea pipeline installations wherein isolation of a particular section of pipeline is difficult or impossible.

One technique which avoids the need for total de-commissioning of a pipeline comprises transporting a slug of water through the pipeline to the area requiring cutting. With portions of the exterior of the pipeline exposed, fluid containment collars are placed around the exterior of the pipeline and filled with a refrigerant such as liquid nitrogen which effects the freezing of the water within the pipeline to form a temporary plug of ice within the pipeline. Patents describing this technique include U.S. Patents 3,827,282, 4,112,706 and 4,416,118. Although this technique effectively shuts off flow through the pipeline and isolates a section of pipeline so that it may be cut, the technique is relatively capital intensive in that it requires the use of external freeze collars which must be properly sized to encircle the outside diameter of each pipeline used, and also requires transport and installation equipment for such freeze collars and transport of the refrigerant. Additionally, access to a pipeline to utilize this technique in remote areas and, particularly in a sub-sea environment, can be extremely difficult and expensive.

U.S. Patent 3,306,870 describes a gelable polymer composition which, upon gelation, is caused to swell upon contact with water to form a liquid-tight, gas-tight seal. Various grouting and sealing applications have been contemplated for this material such as forming a liquid and gas impermeable resilient seal in and around a borehole penetrating a salt dome in which subterranean nuclear detonations are undertaken. Various gasketing and well casing cementing uses have also been made of this polymeric material. The polymeric material has the desirable property of swelling upon contact with water to effect a fluid-tight seal which can withstand considerable differential pressure.

### Summary of the Invention

The present invention provides a means and method for plugging off the flow through a pipeline without de-commissioning while avoiding the potential difficulties associated with mechanical plugging pigs or the complications of an external freeze collar applied to the pipeline.

In accordance with the invention, a pipeline having an internal fluid passage is temporarily plugged from the flow of fluids through the fluid passage by inserting a first water-swellable plugging means into the fluid passage and moving the plugging means to a first location within the fluid passage where a plug is desired. A source of water comprising an aqueous gel is then placed adjacent to the first water-swellable plugging means whereby it swells to form a plug within the fluid passage which is resistant to a pressure differential on either side of the plug.
Further in accordance with the invention, two of the above water-swellable plugging means are placed in first and second positions within the internal fluid passage of the pipeline to isolate a particular section of the pipeline from the remaining pipeline fluids.
Still further in accordance with the invention, the isolated pipeline section as described above may be cut so as to perform some desired operation such as installation of a valve, branching of the pipeline or repair of the pipeline. In yet another aspect of the invention, a pipeline plugging train comprises a water-swellable plugging means of the type described in US-A-3,306,870 and as defined in claim 8.
It is therefore an object of this invention to provide a relatively simple means for plugging the internal fluid passage of a pipeline so that a cutting of the pipeline may be effected without de-commissioning thereof and complete removal of transported fluids.

It is yet another object of this invention to avoid the complicated and expensive mechanical means whereby pipelines may be plugged.

### Brief Description of the Drawings

These and other objects of the invention are accomplished through the manner and form of the present invention to be described hereinafter in conjunction with the accompanying drawings forming a part of this specification and in which :
Figure 1 shows the placement of a pipeline plug in its simplest form in accordance with the invention ;
Figure 2 shows a second placement of a plug in accordance with the invention;
Figure 3 shows the placement of yet another plugging train in accordance with a preferred embodiment of the invention;
Figures 4 and 5 illustrate the testing of the preferred plug in Figure 3 in deferring pipe media;
Figure 6 shows in schematic form the placement of a plugging train in accordance with the invention in order to isolate a section of pipeline for installation of an emergency safety valve;
Figure 7 schematically illustrates a preferred pipeline plugging train in accordance with the invention utilized in the emergency safety valve installation illustrated in Figure 6, and
Figure 8 illustrates the isolation of a section of pipeline in accordance with the present invention.

### Detailed Description of the Preferred Embodiments and the Drawings

The present invention will now be described in the more limited aspects of a preferred embodiment thereof.

The invention employs a formed, rubber-like gel plug which has the property of being capable of swelling upon contact with water. The preferred water-swellable polymeric plugs used in the present invention are of the type described in U.S. Patents 3,306,870 and 3,502,149. These water-swellable plugs comprise pre-formed cylindrical members which are sized so as to be slightly smaller than the internal diameter of a pipeline in which they are to be used. The preferred rubber-like plugs resulting from the gelation of the materials described in the aforementioned patents are resilient and increase in cross-sectional areas when subjected to pressure. They also possess the added desirable property of swelling after gelation when contacted with water, natural brines and other water sources including water which is gelled by polymers.

In plugging a pipeline in accordance with the preferred method of the invention, the appropriate size water-swellable plug is placed in a pipeline pig launcher and injected into the pipeline. The water-swellable plug is then pumped to its desired location within the pipeline where, upon contact with water, the plug swells to create a substantially impermeable seal thereby blocking flow through the pipeline. In accordance with a preferred embodiment of the invention, both ends of the water-swellable plug are in contact with a source of water so that both ends of the plugs expand into engagement with the internal wall of the pipeline thereby increasing the plugging efficiency and holding force against any pressure differential acting on the plug. Due to its resilience, the plug offers the additional advantage of increasing its cross-sectional area and thereby its plugging efficiency by the application of pressure to both ends of the plug. Therefore, the plug is held in place by frictional forces acting against its expanded diameter due to its resilience and further the swelling of the ends of the plug into contact with the internal wall of the pipeline.

The above-mentioned source of water used in the the above method causing the swelling of the plug may be from any source such as sea water, ground water, or, in the preferred embodiment of the invention, a gelled water slug which has been injected into the pipeline adjacent to the water-swellable plug. The preferred gelled water is of a type which is gelled by incorporation of crosslinked polymeric materials of a type which is well-known in the art of pipeline cleaning and which have been described in a number of patents including U.S. Patents 4,379,722, 4,383,783 and 4,003,393. Any one of these or other similar types of gelled water materials may be used in accordance with the present invention. The viscoelastic proportion of the preferred gelled water materials enhance the sealing action of the water-swellable plug. The gelled water materials offer the additional advantage of picking up and entraining particulate materials within the pipeline as it passes through the pipeline thereby effecting a cleaning action in conjunction with the transport of the gelled water materials along with the water-swellable plug to the desired location.

Once the plug is properly in place in its desired location, flow through the pipeline is stopped for a period in order to allow the water swelling of the plug. Following swelling of the plug, the plug is preferably pressure tested in order to ensure its integrity and, following successful pressure testing, the pipeline may be cut or repaired as needed. Upon completion of the desired pipeline operations, the plug may be retrieved by increasing the pressure on one side of the plug to a point whereby it can no longer hold against the pressure and may be easily pumped out and retrieved in accordance with normal pipeline operations.

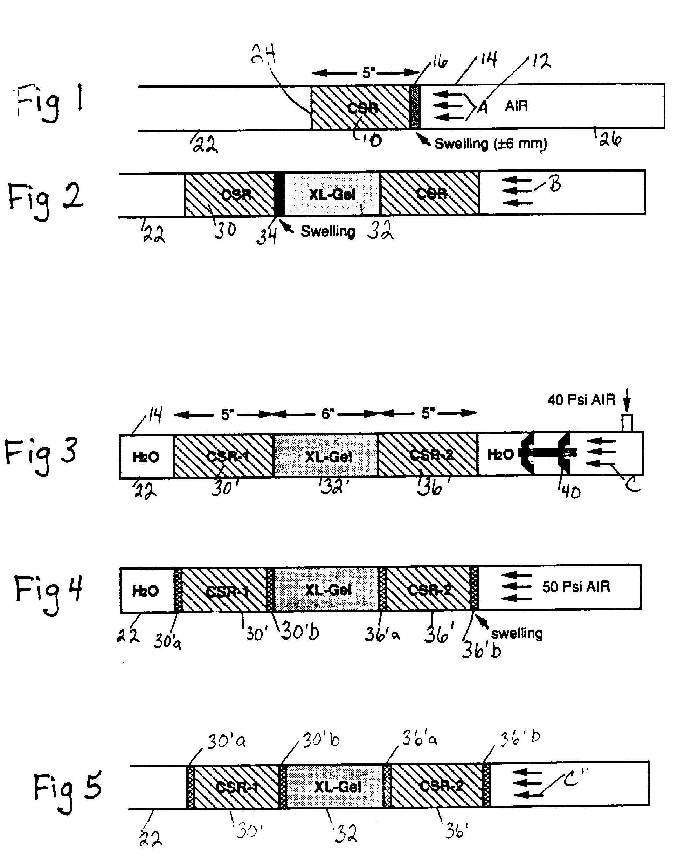

The invention will now be further described in conjunction with the accompanying drawings showing preferred embodiments of the invention and in which Fig. 1 shows a water-swellable plug 10 in a desired location within the internal fluid passage 12 of a pipeline 14, a portion 16 of the end of the water-swellable plug 10 having been in contact with water so as to cause swelling thereof against the internal passage 12 of the pipeline 14. As illustrated in Fig. 1, the portion 22 of the pipeline 14 to the left of the water-swellable plug 10 is open to the atmosphere and atmospheric pressure is applied to the left hand face 24 of the water-swellable plug 10. Air pressure in the right hand portion 26 of the pipeline 14 acts in the direction of the arrows A against the water-swelled portion 16 of the water-swellable plug 10. Upon the application of air pressure, the water-swellable plug 10 maintains its position within the pipeline 14 until the air pressure reaches approximately 20 psi (1 psi = 6895 Pa) at which point the plug starts moving to the left very slowly. At 40 psi, air by-pass around the water-swellable plug 10 occurs.

In a test as illustrated in Fig. 2, a first water-swellable plug 30 was positioned in pipeline 14. A slug of water-based crosslinked gel 32 was emplaced adjacent one of the end of the first water-swellable plug 30 causing swelling of the adjacent end 34 of the plug 30. A second water-swellable plug was placed adjacent the water-based crosslinked gel 32 and air pressure was applied against the second water-swellable plug 36 in the direction of the arrows B. The portion 22 of the pipeline to the left of the first water-swellable plug 30 was at atomospheric pressure. Upon application of air pressure in the direction of arrows B against the plugging train formed by the first and second water-swellable plug 36 and the water-based crosslinked gel 32, very slow movement of the train was induced at about 35 psi air pressure. At approximately 40 psi, the crosslinked gel 32 started leaking past the first water-swellable plug 30 and at 45 psi, the entire train was blown out.

Figs. 3, 4 and 5 show the placement and testing of a pipeline train similar to that shown in Fig. 2 except that water is entrapped within a closed section of the portioned 22 of the pipeline 14 and water is also entrapped between the second water-swellable plug 36′ and a mechanical pig 40. Air pressure at a level 40 psi was applied against the mechanical pig 40 in the directions of the arrows C for a period of twenty hours in order to induce swelling of the water-swellable plugs 30′, 36′ at the interfaces of the water and the water-swellable crosslinked gel 32′.

The swelling of the ends 30′a and 30′b of the first water-swellable plug 30′ and, similarly, the swelling of the ends 36′a, 36′b of the second water-swellable plug 36′ is shown in Fig. 4. Upon removal of the mechanical pig 40 and the adjacent water, air pressure is increased in the direction of arrows C′ to 50 psi. The pressure in the portion 22 of the pipeline increases very slowly until equalization is reached. Slight compression of the water-swellable plugs 30′, 36′ is noted. There was no by-pass of air.

The pipe of Fig. 5 was then opened to the atomosphere in the pipeline portion 22 and air pressure in the direction of arrows C˝ was increased. At about 40 psi differential, the plug train started moving very slowly. At 80 psi differential pressure, gas started to by-pass the plug train.

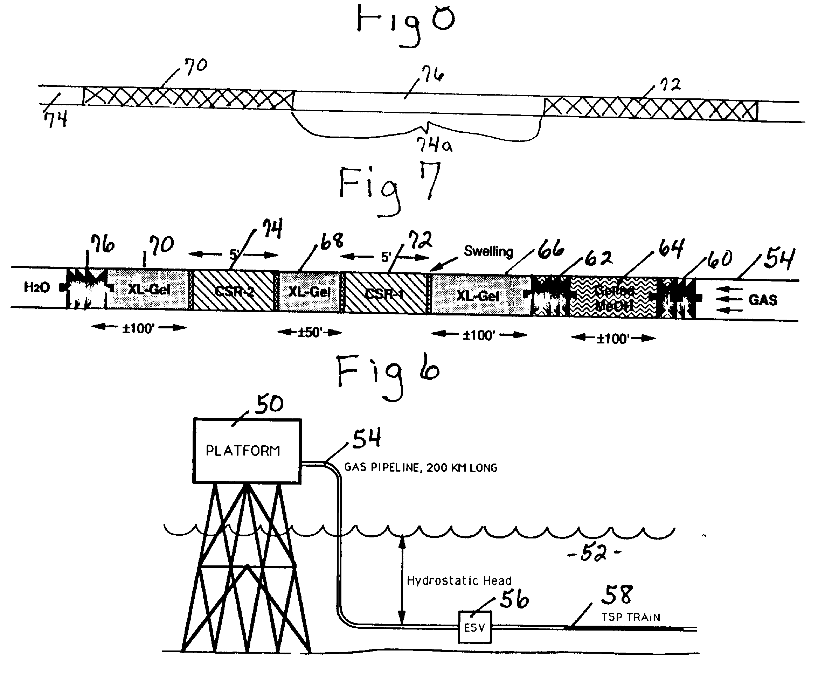

Figs. 6 and 7 illustrate the use of the invention in conjunction with the installation of an emergency safety valve in the gas sales pipeline of an off-shore platform. The platform 50 is located in a body of water 52 and a gas sales pipeline 54 extends from the platform 50 into the body of water 52 and away from the platform 50 to a processing station, a trunk pipeline or the like (not shown). An emergency safety valve 56 is to be positioned along the pipeline 54 within the body of water 52. When it is desired to install, repair or replace the emergency safety valve 56, a plugging train 58 in accordance with the present invention is pumped into the pipeline either from the platform 50 or from its remote end to the position shown in Fig. 6. Preferably, the plugging train 58 is launched into the pipeline from the platform and then returned to the platform by application of increased pressure within the pipeline to return the plugging train to the platform when the pipeline cutting operations are completed.

A preferred pipeline plugging train as used in the installation of the emergency safety valve 56 in Fig. 6 is shown in Fig. 7. As launched from the platform 50, the plugging train comprises first and second mechanical pigs 60, 62 respectively with a slug of gelled methanol 64 located therebetween. The gelled methanol is for the purposes of drying any remaining water from the pipeline upon return of the plugging train to the platform 50 following completion of operations. The remainder of the plugging train comprises alternating slugs of water-based crosslinked gel 66, 68 and 70 with first and second water-swellable polymeric plugs 72 and 74. A third mechanical pig 76 is at the end of the plugging train which is moved along the pipeline into its desired location by water pressure applied thereto.

The procedure to be followed in emplacing the plugging train, installing the emergency safety valve and returning the pipeline to operational status generally comprises pressure equalization to match the hydrostatic head in pipeline for its water depth. The plugging train as described above is then injected into the pipeline at the platform and displaced with water to its desired location. Pressure is then balanced across the pipeline plugging train between the water on one side and the gas remaining in the pipeline on the other. At that point, the pipeline 54 can be cut and the emergency safety valve 56 installed and tested. The pipeline plugging train 58 is then displaced back to the platform by increasing the gas pressure thereby leaving the pipeline dewatered and dried and ready for service use.

The nearly identical procedure is followed for isolating a particular section of pipeline as illustrated in Fig. 8. Two pipeline plugging trains 70, 72 are launched into a pipeline 74 within intermediate water slug 76 in the manner described with respect to Figs. 6 and 7. The plugging trains 70, 72 may be identical to or similar to the plugging trains shown in Fig. 7. Upon swelling of the water-swellable plugs within the plugging train 70, 72, the isolated section 74a of the pipeline may be cut for any desired purpose such as repair, installation of a valve, connection of a branching pipeline or the like.

## Claims

1. A method of temporarily plugging the fluid passage from the flow of fluids, in a pipeline having an internal fluid passage including a substantially cylindrical inner wall, comprising :
inserting a first water-swellable plugging means into the fluid passage ;
moving the first water-swellable plugging means to a first location within said fluid passage where a first plug is desired ; and characterized by
providing a first source of water comprising an aqueous gel within said fluid passage adjacent said first location whereby said first water-swellable plugging means swells to form a first plug within said fluid passage upon absorption of said water.

2. The method as set forth in claim 1 further including the step of pressurizing said fluid passage against said first plug.

3. The method as set forth in claim 2 wherein said first source of water comprises gelled aqueous fluid cleaning means and said method further includes the step of cleaning said inner wall during said step of moving.

4. The method as set forth in claim 1, further including the steps of inserting, moving and providing a second water-swellable plugging means and a second source of water to a second location withing said fluid passage wherein a section of said pipeline is isolated between said first and second plugs.

5. The method as set forth in claim 4 further including the step of pressurizing said fluid passage against said first and second plugs.

6. The method as set forth in claim 4 further including the step of cutting said section of said pipeline between said first and second plugs.

7. The method as set forth in claim 6 further including the steps of removing and replacing said section of pipeline between said plugs.

8. A pipeline plugging train for temporarily plugging a section of a pipeline of the type comprising a water-swellable resilient polymeric plug body characterized in that it has leading and trailing slugs of gelled water adjacent said water-swellable plugs for providing water to said plug.

## Patentansprüche

1. Verfahren zum vorübergehenden Verstopfen des Fluiddurchgangs gegen den Strom von Fluiden in einer Rohrleitung mit einem inneren Fluiddurchgang, der eine im wesentlichen zylindrische innere Wand enthält, umfassend:
Einführen eines ersten mit Wasser quellbaren Verstopfungsmittels in den Fluiddurchgang;
Bewegen des ersten mit Wasser quellbaren Verstopfungsmittels an einen ersten Ort in dem Fluiddurchgang, an welchem ein Verschlußstopfen erwünscht ist, und
**dadurch gekennzeichnet,**
daß benachbart dem ersten Ort in dem Fluiddurchgang eine erste, ein wäßriges Gel umfassende Wasserquelle bereitgestellt wird, wobei das erste, mit Wasser quellbare Verstopfungsmittel quillt, um einen ersten Verschlußstopfen innerhalb des Fluiddurchgangs bei Absorption des Wassers zu bilden.

2. Verfahren nach Anspruch 1, weiterhin umfassend den Schritt des unter Druck setzens des Fluiddurchgangs gegen den ersten Verschlußstopfen.

3. Verfahren nach Anspruch 2, worin die erste Wasserquelle gelierte wäßrige Fluidreinigungsmittel umfaßt und worin das Verfahren weiterhin den Schritt des Reinigens der inneren Wand während dem Bewegungsschritt einschließt.

4. Verfahren nach Anspruch 1, weiterhin umfassend die Schritte Einführen, Bewegen und Bereitstellen eines zweiten mit Wasser quellbaren Verstopfungsmittels und einer zweiten Wasserquelle an einem zweiten Ort in dem Fluiddurchgang, wobei ein Abschnitt der Rohrleitung zwischen dem ersten und zweiten Verschlußstopfen isoliert wird.

5. Verfahren nach Anspruch 4, weiterhin umfassend den Schritt des unter Druck setzens des Fluiddurchgangs gegen den ersten und zweiten Verschlußstopfen.

6. Verfahren nach Anspruch 4, weiterhin umfassend den Schritt des Abtrennens des Abschnitts der Rohrleitung zwischen dem ersten und zweiten Verschlußstopfen.

7. Verfahren nach Anspruch 6, weiterhin umfassend die Schritte Entfernen und Ersetzen des Abschnitts der Rohrleitung zwischen den Verschlußstopfen.

8. Verschlußstopfenfolge des Typs, welcher einen mit Wasser quellbaren elastischen polymeren Verschlußstopfenkörper umfaßt zum vorübergehenden Verstopfen eines Abschnitts einer Rohrleitung,
**dadurch gekennzeichnet**,
daß er vorangehende und nachfolgende Pfropfen aus geliertem Wasser zum Versorgen des Verschlußstopfens mit Wasser umfaßt, welche den mit Wasser quellbaren Verschlußstopfen benachbart sind.

## Revendications

1. Un procédé d'obturation temporaire de l'écoulement de fluides dans un passage de fluide, dans un pipe-line comprenant un passage interne de fluide incluant une paroi intérieure sensiblement cylindrique, comprenant les étapes consistant à:
insérer dans le passage de fluide un premier moyen d'obturation gonflable à l'eau;
déplacer le premier moyen d'obturation gonflable à l'eau vers un premier emplacement à l'intérieur dudit passage de fluide où un premier tampon est souhaité; et caractérisé par les étapes consistant à
disposer près dudit premier emplacement près dudit premier emplacement à l'intérieur dudit passage de fluide une première source d'eau comprenant un gel aqueux, grâce à quoi ledit premier moyen d'obturation gonflable à l'eau se gonfle afin de former à l'intérieur dudit passage de fluide un premier tampon lors de l'absorption de ladite eau.

2. Le procédé selon la revendication 1 incluant en outre l'étape consistant à mettre en pression ledit passage de fluide contre ledit premier tampon.

3. Le procédé selon la revendication 2 dans lequel ladite première source d'eau comprend un moyen de nettoyage de fluide aqueux gélifié et ledit procédé inclut en outre l'étape consistant à nettoyer ladite paroi intérieure pendant ladite étape de déplacement.

4. Le procédé selon la revendication 1, incluant en outre les étapes consistant à insérer, déplacer et disposer un deuxième moyen d'obturation gonflable à l'eau et une deuxième source d'eau à un deuxième emplacement à l'intérieur dudit passage de fluide, une section dudit passage de pipe-line étant ainsi isolée entre lesdits premier et deuxième tampons.

5. Le procédé selon la revendication 4 incluant en outre l'étape consistant à mettre en pression ledit passage de fluide contre ledit premier et ledit deuxième tampons.

6. Le procédé selon la revendication 4 incluant en outre l'étape consistant à couper ladite section dudit pipe-line entre lesdits premier et deuxième tampons.

7. Le procédé selon la revendication 6 incluant en outre l'étape consistant à enlever et remplacer ladite section de pipe-line entre lesdits tampons.

8. Un train d'obturation de pipe-line servant à obturer temporairement une section d'un pipe-line du type comprenant un corps de tampon polymère élastique gonflable à l'eau, caractérisé en ce qu'il comprend, près desdits tampons gonflables à l'eau, des bouchons avant et arrière d'eau gélifiée afin d'amener de l'eau audit tampon.
